# FASCICULE DE BREVET EUROPEEN

(11) **EP 3 173 288 B1**
(45) Date de publication et mention de la délivrance du brevet: **01.08.2018**
(21) Numéro de dépôt: 16201444.3
(22) Date de dépôt: 30.11.2016
(51) Int. Cl.: B60R 7/04, B60R 11/00

(54) **CONSOLE COULISSANTE, GAMME DE CONSOLES, PROCÉDÉ DE PRODUCTION CORRESPONDANT**
SCHIEBEKONSOLE, KONSOLEN-SORTIMENT UND ENTSPRECHENDES HERSTELLUNGSVERFAHREN
SLIDING CONSOLE, RANGE OF CONSOLES, CORRESPONDING MANUFACTURING PROCESS

(30) Priorité: 30.11.2015 FR 1561590
(43) Date de publication de la demande: 31.05.2017
(73) Titulaire: Faurecia Intérieur Industrie, 92000 Nanterre (FR)
(72) Inventeur: BAUDART, Laurent, 60530 FRESNOY EN THELLE (FR); SAULAY, Jean-Philippe, 78430 LOUVECIENNES (FR)
(74) Mandataire: Lavoix

(56) Documents cités:
- EP-A1- 1 245 447
- EP-A2- 1 982 865

## Description

L'invention concerne en général les consoles coulissantes de véhicules.

Plus précisément, l'invention concerne selon un premier aspect une console coulissante de véhicule, du type comprenant :
- un support fixe destiné à être fixé à une structure du véhicule ;
- un corps de console mobile longitudinalement par rapport au support fixe ;
- un dispositif de liaison coulissante du corps de console au support fixe, le dispositif de liaison comprenant deux glissières longitudinales ayant chacune un rail longitudinal et un coulisseau engagé libre en translation dans le rail.

De telles consoles sont connues par exemple de EP 1 245 447. Ce document décrit un dispositif de liaison coulissante comportant un support sur lequel sont fixés les rails. Le corps de console est rigidement fixé au support.

Les constructeurs automobiles ont des exigences croissantes quant à la tenue du corps de console sur le support, et au comportement vibratoire de cette liaison. Par ailleurs, leurs exigences sont également croissantes pour la rigidité de la console coulissante et pour la résistance aux chocs.

Ces exigences sont particulièrement difficiles à satisfaire avec la console de EP 1 245 447, du fait que celle-ci, en bout de course, présente un porte-à-faux important par rapport au support fixe.

Une possibilité pour améliorer le comportement de la console coulissante de EP 1 245 447 est d'augmenter l'épaisseur du support. Toutefois, ceci conduit à une augmentation importante de la masse de ce support.

Dans ce contexte, l'invention vise à proposer une console coulissante permettant de satisfaire les exigences des constructeurs, sans augmentation de masse.

A cette fin, l'invention porte sur une console coulissante du type précité, caractérisée en ce que le dispositif de liaison coulissante comprend deux supports mobiles écartés transversalement l'un de l'autre et au moins deux renforts distincts l'un de l'autre et distincts des supports mobiles, les renforts étant espacés longitudinalement l'un de l'autre et fixant les supports mobiles l'un à l'autre, le corps de console étant fixé aux renforts, chaque rail étant fixé à l'un des supports mobiles, les coulisseaux étant fixés au support fixe.

Les supports mobiles et les renforts forment un châssis rigide, dont le poids n'est pas excessif, du fait que les supports mobiles sont écartés l'un de l'autre et que les renforts sont écartés les uns des autres. Cette structure comporte ainsi typiquement des évidements de grande taille, qui contribuent à réduire son poids total.

Par ailleurs, du fait que les supports mobiles et que les renforts sont des pièces distinctes, indépendantes les unes des autres, les matériaux et les épaisseurs peuvent être choisis de manière à respecter exactement les exigences des constructeurs automobiles.

Le support de EP 1 245 447 est par exemple obtenu par extrusion. Il n'est pas possible de réaliser une augmentation d'épaisseur locale dans un tel support, de manière à renforcer seulement une zone de cette pièce. Au contraire, dans l'invention, il est possible de ne renforcer que certaines pièces de la structure.

Enfin, dans l'invention, le nombre de renforts est choisi en fonction des exigences à respecter. Si le poids du corps de console est faible, il est possible de prévoir seulement un petit nombre de renforts, par exemple deux renforts. Au contraire, si le poids du corps de console est plus élevé, il est possible de prévoir trois renforts ou plus de trois renforts.

Ainsi, la masse de la structure est toujours au minimum.

La console peut en outre présenter une ou plusieurs des caractéristiques ci-dessous, considérées individuellement ou selon toutes les combinaisons techniquement possibles :
- les supports mobiles sont des profilés métalliques longitudinaux ;
- chaque renfort est une pièce métallique allongée transversalement, présentant deux partie extrémités transversales opposées l'une à l'autre fixées chacune à un support mobile ;
- chaque renfort présente une forme de berceau, les parties d'extrémité faisant saillie par rapport à une partie centrale du renfort ;
- le dispositif de liaison coulissante comprend au moins un couvercle, des extrémités longitudinales respectives en vis-à-vis des supports mobiles étant fixées l'une à l'autre par ledit couvercle ;
- chaque couvercle est une plaque métallique comportant une zone centrale sensiblement perpendiculaire à la direction longitudinale, et un bord plié par rapport à la zone centrale et s'étendant sur au moins une partie de la périphérie de la zone centrale, des encoches étant découpées dans le bord plié pour conférer une flexibilité transversale au couvercle ; et
- les renforts et les supports mobiles sont fixés les uns aux autres par un procédé sans apport de chaleur.

Selon un second aspect, l'invention porte sur une gamme de consoles ayant les caractéristiques ci-dessus, la gamme comprenant :
- au moins une première console, comportant des supports mobiles et un premier nombre de renforts ;
- au moins une seconde console, de dimensions différentes de la première console, comportant des supports mobiles et un second nombre de renforts ;
les renforts des première et seconde consoles étant identiques.

La gamme de console peut en outre présenter une ou plusieurs des caractéristiques ci-dessous, considérées individuellement ou en combinaison :
- les supports mobiles sont identiques ;
- le premier nombre et le deuxième nombre de renforts sont différents.

Selon un troisième aspect, l'invention porte sur un procédé de fabrication de la gamme de consoles ci-dessus, comprenant les étapes suivantes :
- fabrication d'une pluralité de supports mobiles ;
- fabrication d'une pluralité de renforts tous identiques ;
- fabrication de ladite au moins une première console et de ladite au moins une seconde console à partir des supports mobiles et des renforts préalablement fabriqués.

D'autres caractéristiques et avantages de l'invention ressortiront de la description détaillée qui en est donnée ci-dessous, à titre indicatif et nullement limitatif, en référence aux figures annexées, parmi lesquelles :
- la figure 1 montre en perspective une console coulissante selon l'invention, à l'état éclaté et à l'état partiellement assemblé ; et
- la figure 2 représente des gammes de consoles coulissantes selon l'invention.

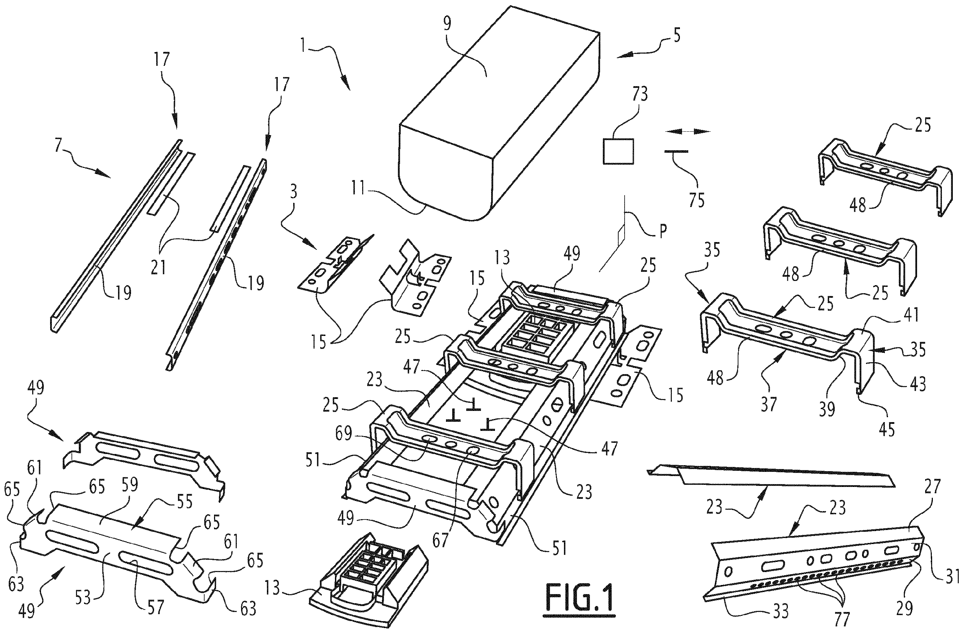

La console coulissante représentée sur la figure 1 est destinée à être installée dans un véhicule automobile, typiquement dans une voiture ou un camion.

Typiquement, une telle console coulissante 1 est placée entre les sièges avant du véhicule. En variante, elle est placée entre des sièges de deuxième rang, ou de troisième rang, ou à tout autre endroit du véhicule.

La console coulissante 1 comprend :
- un support fixe 3 destiné à être fixé à une structure du véhicule ;
- un corps de console 5 mobile longitudinalement par rapport au support fixe 3 ;
- un dispositif 7 de liaison coulissante du corps de console 5 au support fixe 3.

La direction longitudinale correspond typiquement à la direction de déplacement normale du véhicule. En variante, cette direction est perpendiculaire à la direction de déplacement normale du véhicule, ou possède toute autre orientation par rapport à la direction de déplacement normale du véhicule. La direction transversale est perpendiculaire à la direction longitudinale. Les directions longitudinale et transversale définissent ensemble un plan sensiblement parallèle au plancher du véhicule.

Le support fixe 3 est destiné à être fixé typiquement au plancher du véhicule, ou à toute autre structure adaptée.

Le corps de console 5 comporte par exemple une enveloppe creuse, délimitant intérieurement un volume de rangement pour de petits accessoires. Il est par exemple fermé vers le haut par un couvercle mobile, qui peut servir d'accoudoir pour les passagers. Il est délimité vers le plancher du véhicule par un fond 11.

En variante, le corps de console ne sert pas de stockage ou de vide-poche, mais a toute autre fonction telle que lecteur de CD ou de DVD, stockage de boissons réfrigérées, support de prises électriques ou de prises USB etc...

Dans l'exemple représenté, le support fixe 3 comporte un support de moteur 13 et deux pattes 15. Les pattes 15 sont disposées transversalement de part et d'autre du support de moteur 13. Chaque patte 15 est rigidement fixée à la structure du véhicule. Le support 13 est rigidement fixé aux pattes 15.

Le dispositif de liaison 7 comporte deux glissières longitudinales 17 comportant chacune un rail longitudinal 19 et un coulisseau 21 engagé libre en translation dans le rail 19.

Chaque coulisseau 21 présente, longitudinalement, une longueur nettement plus faible que celle du rail 19. La course de chaque coulisseau 21 dans le rail 19 est par exemple de 30 cm.

Le dispositif de liaison 7 comporte encore deux supports mobiles 23 écartés transversalement l'un de l'autre, et au moins deux renforts 25 distincts l'un de l'autre et distincts des supports mobiles 23, espacés longitudinalement l'un de l'autre et fixant les supports mobiles 23 l'un à l'autre.

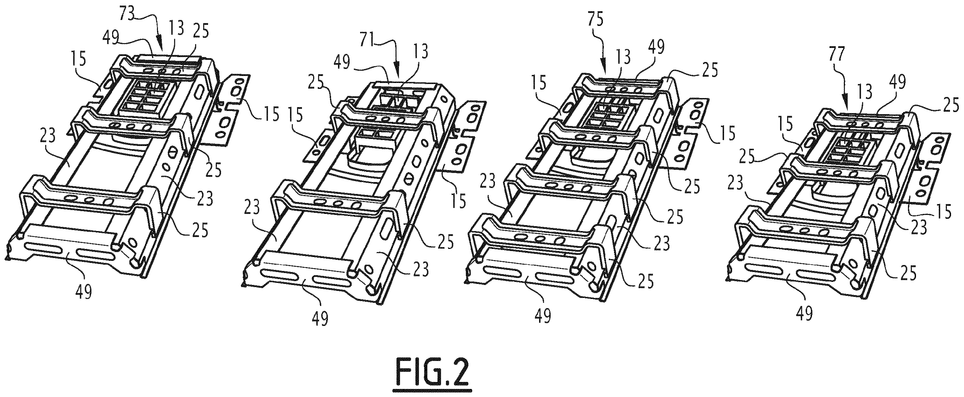

Dans l'exemple représenté sur la figure 1, le dispositif de liaison 7 comporte trois renforts 25. En variante, comme représenté sur la figure 2, le dispositif de liaison comporte seulement deux renforts 25, ou quatre renforts 25 et peut également comporter plus de quatre renforts 25.

Les supports mobiles 23 sont écartés transversalement l'un de l'autre au sens où il existe entre les supports mobiles 23 un espace libre continu. Ainsi, les supports mobiles 23 typiquement ne se touchent jamais et ne se recouvrent pas. Les supports mobiles 23 ne sont pas venus de matière l'un avec l'autre et n'ont aucune liaison directe l'un avec l'autre.

Typiquement, les supports mobiles 23 sont des profilés métalliques longitudinaux. Ils sont typiquement obtenus par emboutissage, ou par extrusion.

Les supports mobiles 23 sont par exemple symétriques l'un de l'autre par rapport à un plan médian longitudinal sensiblement perpendiculaire au plan défini par les glissières 17. Ce plan P est matérialisé sur la figure 1.

Les deux supports mobiles 23 sont typiquement identiques l'un à l'autre.

Dans l'exemple représenté, chaque support mobile 23 comporte vers le haut un segment supérieur plat 27. Le segment plat 27 est parallèle au plan défini par les glissières. Chaque support mobile comporte encore, sous le segment supérieur 27, un segment vertical 29, sensiblement parallèle au plan médian P.

Les segments 27 et 29 sont raccordés l'un à l'autre par un segment oblique 31.

A l'opposé du segment 31, le segment vertical 29 est délimité par un bord plié 33, sensiblement parallèle au segment supérieur 27 et pointant dans une direction opposée au segment 27.

Le support mobile 23 est donc de forme générale concave vers le plancher du véhicule et vers l'autre support mobile 23.

Les segments 27, 29, 31 et le bord plié 33 s'étendent longitudinalement sur toute la longueur du support mobile.

Les rails 19 sont fixés chacun sur un support mobile 23. Typiquement, les rails 19 présentent une première longueur longitudinale, les supports mobiles 23 présentant une seconde longueur longitudinale comprise entre la première longueur longitudinale et la première longueur longitudinale + 20%. Par exemple, la seconde longueur longitudinale est égale à la première longueur longitudinale plus 10 mm. Les coulisseaux 21 sont typiquement rigidement fixés aux pattes 15 ou au support moteur 13.

Les renforts 25 sont tous identiques les uns aux autres. Typiquement, ce sont des pièces métalliques, obtenues par emboutissage.

Chaque renfort 25 présente une forme allongée transversalement. Les renforts 25 sont des pièces entièrement indépendantes les unes des autres, sans liaison directe les unes avec les autres. Elles ne sont pas venues de matière les unes avec les autres. Chaque renfort 25 présente deux parties d'extrémité transversale 35 opposées l'une à l'autre, fixées chacune à l'un des supports mobiles 23.

Comme visible sur la figure 1, chaque renfort 25 présente de préférence une forme de berceau, les parties d'extrémité 35 faisant saillie par rapport à une partie centrale 37 du renfort. Les parties d'extrémité 35 font saillie vers le haut, c'est-à-dire à l'opposé du plancher du véhicule.

Typiquement, la partie centrale 37 est sensiblement plane et parallèle au plan défini par les glissières. Chaque partie d'extrémité 35 prolonge transversalement la partie centrale et comporte, à partir de la partie centrale 37 un premier bras court 39, un sommet plat 41 puis un second bras long 43. Le bras court 39 s'étend, à partir de la partie centrale 37, vers le haut et transversalement dans une direction opposée à l'autre partie d'extrémité 35.

Le sommet plat 41 est sensiblement parallèle au plan défini par les glissières. Le bras long 43 s'étend, à partir du sommet plat 41, vers le bas c'est-à-dire vers le plancher, et transversalement suivant une direction opposée à l'autre partie d'extrémité 35.

Comme visible sur les figures, considéré parallèlement au plan P, le bras long 43 présente une longueur plus grande que le bras court 39. Ainsi, il présente une extrémité libre située sous la partie centrale 37, c'est-à-dire plus proche du plancher que la partie centrale 37.

Les renforts 25 sont typiquement régulièrement répartis longitudinalement, le long des supports mobiles 23. Ils sont disposés longitudinalement à distance des extrémités des supports mobiles 23, comme le montrent les figures.

Chaque renfort 25 est disposé de telle sorte que le tronçon central 37 repose sur les segments supérieurs 27 des supports mobiles. Plus précisément, des extrémités opposées de la partie centrale 37 sont en appui sur les segments supérieurs 27. Par ailleurs, les bras longs 43 sont placés contre les segments verticaux 29.

Les renforts 25 et les supports mobiles 23 sont fixés les uns aux autres par un procédé sans apport de chaleur, de manière à ne pas déformer les renforts ou les supports mobiles au moment de cette fixation. Ainsi, les renforts et les supports mobiles sont de préférence fixés les uns aux autres par clinchage. Le clinchage est une opération de fixation dans laquelle la matière constituant le support mobile est repoussée à l'intérieur d'un orifice ménagé dans le renfort. Cette matière forme une collerette entourant l'orifice d'un côté opposé au support mobile. En variante, la matière constituant le renfort est repoussée à l'intérieur d'un orifice ménagé dans le support mobile.

Par exemple, chaque renfort 25 est fixé en plusieurs points au support mobile 23: au niveau des deux bras allongés 43 et aux deux extrémités opposées de la partie centrale 37. La partie centrale 37 est fixée aux segments supérieurs 27, et les bras 43 aux segments verticaux 29.

Il est à noter que, pour augmenter la rigidité des renforts 25, des bords pliés 48 sont prévus à la fois le long de la partie centrale 37 et le long des parties d'extrémité 35, sur toute ou partie de la périphérie du renfort.

Le corps de console 5 est fixé directement aux renforts 25, et plus précisément à la partie centrale 37 de chaque renfort 25. Il est fixé à chaque renfort 25 par des organes de fixation 47 mécaniques, allongés suivant une direction perpendiculaire au plan défini par les glissières.

Ces organes de fixation 47 sont typiquement des vis. Ils coopèrent avec le fond 11 du corps de console 5. Un tel agencement est particulièrement favorable pour la rigidité de la fixation du corps de console 5 au dispositif de liaison coulissante 7.

Par ailleurs, le dispositif de liaison coulissante 7 comporte de préférence au moins un couvercle 49, des extrémités longitudinales 51 respectives en vis-à-vis des supports mobiles 23 étant fixées l'une à l'autre par ledit couvercle 49.

De préférence, le dispositif de liaison 7 comporte deux couvercles 49. L'un des couvercles 49 fixe rigidement l'une à l'autre des premières extrémités 51 en vis-à-vis des supports mobiles 23, et l'autre couvercle 49 fixe l'une à l'autre des secondes extrémités longitudinales 51 en vis-à-vis des supports mobiles 23. Les secondes extrémités sont opposées aux premières extrémités.

Les couvercles 49 permettent de rigidifier les extrémités de la structure supportant le corps de console 5, et de maintenir la géométrie globale.

Les deux couvercles 49 sont de préférence identiques.

Chaque couvercle 49 est typiquement une plaque métallique obtenue par emboutissage.

Comme visible sur les figures, chaque couvercle 49 comporte typiquement une zone centrale 53 sensiblement perpendiculaire à la direction longitudinale, et un bord 55 plié par rapport à la zone centrale 51. Le bord plié 55 s'étend sur toute ou partie de la périphérie de la zone centrale 53.

La zone centrale 53 présente une forme allongée transversalement, et peut comporter des évidements 57 de manière à alléger la structure. Le bord plié 55 comporte un tronçon central 59 rigidement fixé aux segments supérieurs 27 des deux supports mobiles 23.

Le bord plié 55 comporte également deux premiers tronçons latéraux 61 rigidement fixés aux segments inclinés 31 des deux supports mobiles. Il comporte encore deux seconds tronçons latéraux 63 rigidement fixés aux deux segments verticaux 29 des supports mobiles.

Typiquement, des encoches 65 sont découpées dans le bord plié 55 pour conférer une flexibilité transversale au couvercle 49. Avantageusement, une encoche 65 est prévue entre le tronçon central 59 et chaque premier tronçon latéral 61, et une autre entre chaque tronçon 61 et le second tronçon latéral 63 voisin. En revanche, le tronçon central 59 est continu et ne comporte pas d'encoche 65.

Avantageusement, les renforts 25 sont prévus pour permettre la fixation isostatique du corps de console 5.

Ainsi, la position transversale du corps de console 5 par rapport au support fixe 3 est déterminée par un trou oblong 67, allongé longitudinalement et ménagé dans la partie centrale 37 du renfort. Le trou oblong 67 est prévu pour recevoir des organes de fixation 47.

La position de la console 5 suivant la direction longitudinale est déterminée par un autre trou oblong 69, allongé suivant la direction transversale, et ménagé dans la partie centrale 37 du renfort. Un des organes de fixation 47 est engagé dans l'orifice 69.

La position du corps de console suivant la direction verticale, c'est-à-dire perpendiculaire au plan défini par les glissières 17 est définie par le plan défini par la surface passant par les sommets plats 41.

De préférence, le dispositif de liaison coulissante comporte un moteur 73 prévu pour déplacer transversalement un doigt de blocage 75 par le biais d'une chaîne cinématique non représentée.

Par ailleurs, au moins l'un des supports mobiles 23 présente une pluralité d'orifices de blocage 77, alignés longitudinalement et répartis sur toute la longueur longitudinale du support mobile 23. Ces orifices sont par exemple ménagés sur le segment vertical 29.

Le moteur 73 est prévu pour déplacer le doigt 75 sélectivement entre une position de blocage de la console en position courante, et une position de libération dans laquelle le corps de console 5 est libre longitudinalement par rapport au support fixe. Dans la position de blocage, le doigt 75 est engagé dans l'un des orifices 77. Dans la position de libération, le doigt 75 est extrait hors de l'orifice 77. Il est ainsi possible de déplacer le corps de console 5, avec les supports mobiles 23 et les renforts 25, longitudinalement par rapport au support fixe 3. Le moteur 73 est commandé par un organe de commande non représenté, actionnable par les passagers du véhicule.

Le nombre de renforts 25 est déterminé par la longueur longitudinale de la console, mais aussi par la rigidité de la liaison à obtenir avec le corps de console.

Le fait que la structure supportant le corps de console soit réalisée en plusieurs pièces indépendantes permet de choisir pour chaque pièce l'épaisseur voulue.

En contrepartie, il est nécessaire pour la fabrication de la console coulissante de disposer de plusieurs outils d'emboutissage, typiquement un outil d'emboutissage pour les renforts, un outil d'emboutissage pour les supports mobiles et un outil d'emboutissage pour les couvercles. Toutefois, ces outils d'emboutissage sont simples, car les pièces à fabriquer sont de petites tailles, et sont de formes simples.

Par ailleurs on relèvera que la console coulissante comporte plusieurs jeux de pièces identiques : deux supports mobiles 23 de même forme, plusieurs renforts 25 de même forme, deux pattes 15 de même forme et deux couvercles 49 de même forme.

Ceci permet de réduire les coûts de fabrication.

Selon un second aspect, particulièrement représenté sur la figure 2, l'invention permet de réaliser une gamme de consoles de dimensions différentes.

Cette gamme comprend :
- au moins une première console 71 comportant des supports mobiles 23 et un premier nombre de renforts 25 ;
- au moins une seconde console, de dimensions différentes de la première console 71, comportant des supports mobiles 23 et un second nombre de renforts 25.

Les renforts 25 des première et seconde consoles sont identiques.

Par dimensions différentes, on entend ici :
- que la longueur et/ou la hauteur du corps de console 5 de la seconde console sont différentes de celles du corps de console 5 de la première console 71,
- ou encore que les corps de console 5 des première et seconde consoles sont identiques, mais que les supports mobiles 23 des première et seconde consoles sont de dimensions différentes.

Selon un premier exemple de réalisation, la seconde console est la console référencée 73 sur la figure 2. Le premier nombre de renforts est différent du second nombre de renforts. En revanche, les supports mobiles 23 des première et seconde consoles 71, 73 sont identiques.

Typiquement, toutes les pièces des première et seconde consoles 71, 73 sont identiques les unes aux autres.

Par exemple, la gamme de consoles comporte en outre au moins une troisième console 75, avec un troisième nombre de renforts 25 différents des premier et second nombres, ou même encore d'autres consoles avec un nombre encore différent de renforts.

Par exemple, la première console 71 comporte deux renforts 25, la seconde console 73 comporte trois renforts 25 et la troisième console 75 comporte quatre renforts 25, comme illustré sur la figure 2.

Selon un second exemple de réalisation, la seconde console est la console 77 représentée sur la figure 2.

La première console 71 comporte des supports mobiles 23 ayant une première longueur.

La seconde console 77 comporte des supports mobiles 23 ayant une seconde longueur différente de la première longueur.

Les supports mobiles des première et seconde consoles 71, 77, avantageusement, ne diffèrent que par leur longueur longitudinale. Les première et seconde consoles 71, 77 comportent par ailleurs les mêmes pièces.

La gamme de consoles comporte en variante au moins une troisième console, qui ne se différencie des première et seconde consoles que parce que les supports mobiles ont une troisième longueur différente des première et seconde longueurs, et même encore d'autres consoles avec des supports mobiles ayant encore d'autres longueurs.

Les première et seconde consoles 71, 77 comportent le même nombre de renforts 25 ou comportent un nombre de renforts 25 différent l'un de l'autre.

La gamme de console selon un troisième exemple de réalisation comporte, outre la première console 71, une ou plusieurs secondes consoles du type de la console 73, et une ou plusieurs secondes consoles du type de la console 77.

Le procédé de fabrication de la gamme de consoles comprend les étapes suivantes :
- fabrication d'une pluralité de supports mobiles 23 ;
- fabrication d'une pluralité de renforts 25 tous identiques ;
- fabrication d'au moins une première console 71 et d'au moins une seconde console 73, 77 à partir des supports mobiles 23 et des renforts 25 préalablement fabriqués.

De préférence, on fabrique un grand nombre de premières consoles 71 et un grand nombre de secondes consoles 73, 77.

Pour la gamme selon le premier exemple de réalisation, les supports mobiles 23 sont tous identiques.

En variante, le procédé de fabrication comporte une étape de fabrication d'autres consoles à partir des supports mobiles 23 tous identiques et des renforts 25 préalablement fabriqués, ces autres consoles ayant d'autres nombres de renforts 25.

Pour la gamme selon le second exemple de réalisation, on fabrique une pluralité de supports mobiles 23 de première longueur et d'une pluralité de supports mobiles 23 de seconde longueur.

Les premières consoles 71 sont fabriquées à partir des supports mobiles 23 de première longueur.

Les secondes consoles 77 sont fabriquées à partir des supports mobiles 23 de seconde longueur.

En variante, le procédé comporte une étape de fabrication, d'autres supports mobiles ayant d'autres longueurs, et une étape de fabrication d'autres consoles à partir desdits autres supports mobiles et des renforts préalablement fabriqués.

Ainsi, il est possible, avec les mêmes éléments ou pratiquement les mêmes éléments, de constituer des consoles adaptées à différents types de véhicules.

## Revendications

1. Console coulissante de véhicule, la console (1) comprenant :
- un support fixe (3) destiné à être fixé à une structure du véhicule ;
- un corps de console (5) mobile longitudinalement par rapport au support fixe (3);
- un dispositif (7) de liaison coulissante du corps de console (5) au support fixe (3), le dispositif de liaison (7) comprenant deux glissières (17) longitudinales ayant chacune un rail (19) longitudinal et un coulisseau (21) engagé libre en translation dans le rail (19) ;
**caractérisé en ce que** le dispositif de liaison (7) coulissante comprend deux supports mobiles (23) écartés transversalement l'un de l'autre et au moins deux renforts (25) distincts l'un de l'autre et distincts des supports mobiles (23), les renforts (25) étant espacés longitudinalement l'un de l'autre et fixant les supports mobiles (23) l'un à l'autre, le corps de console (5) étant fixé aux renforts (25), chaque rail (19) étant fixé à l'un des supports mobiles (23), les coulisseaux (21) étant fixés au support fixe (3).

2. Console selon la revendication 1, **caractérisé en ce que** les supports mobiles (23) sont des profilés métalliques longitudinaux.

3. Console selon l'une quelconque des revendications précédentes, **caractérisé en ce que** chaque renfort (25) est une pièce métallique allongée transversalement, présentant deux partie extrémités transversales (35) opposées l'une à l'autre fixées chacune à un support mobile (23).

4. Console selon la revendication 4, **caractérisé en ce que** chaque renfort (25) présente une forme de berceau, les parties d'extrémité (35) faisant saillie par rapport à une partie centrale (37) du renfort (25).

5. Console selon l'une quelconque des revendications précédentes, **caractérisé en ce que** le dispositif de liaison (7) coulissante comprend au moins un couvercle (49), des extrémités longitudinales (51) respectives en vis-à-vis des supports mobiles (23) étant fixées l'une à l'autre par ledit couvercle (49).

6. Console selon la revendication 7, **caractérisé en ce que** chaque couvercle (49) est une plaque métallique comportant une zone centrale (53) sensiblement perpendiculaire à la direction longitudinale, et un bord (55) plié par rapport à la zone centrale (53) et s'étendant sur au moins une partie de la périphérie de la zone centrale (53), des encoches (65) étant découpées dans le bord plié (55) pour conférer une flexibilité transversale au couvercle (49).

7. Console selon l'une quelconque des revendications précédentes, **caractérisé en ce que** les renforts (25) et les supports mobiles (23) sont fixés les uns aux autres par un procédé sans apport de chaleur.

8. Gamme de consoles selon l'une quelconque des revendications précédentes, la gamme comprenant :
- au moins une première console (71), comportant des supports mobiles (23) et un premier nombre de renforts (25);
- au moins une seconde console (73), de dimensions différentes de la première console, comportant des supports mobiles (23) et un second nombre de renforts (25);
les renforts (25) des première et seconde consoles (71, 72) étant identiques.

9. Gamme de consoles selon la revendication précédente, **caractérisée en ce que** les supports mobiles (23) sont identiques.

10. Gamme de consoles selon la revendication 8 ou 9, **caractérisée en ce que** le premier nombre et le deuxième nombre de renforts (25) sont différents.

11. Procédé de fabrication d'une gamme de consoles selon les revendications 8 à 10, le procédé comprenant les étapes suivantes :
- fabrication d'une pluralité de supports mobiles (23) ;
- fabrication d'une pluralité de renforts (25) tous identiques ;
- fabrication de ladite au moins une première console (71) et de ladite au moins une seconde console (73) à partir des supports mobiles (23) et des renforts (25) préalablement fabriqués.

## Patentansprüche

1. Schiebe-Konsole für ein Fahrzeug (1), aufweisend:
- einen fixen Halter (3), der dazu bestimmt ist, an einer Struktur des Fahrzeugs fixiert zu sein,
- einen Konsolenkörper (5), der bezüglich des fixen Halters (3) längsbewegbar ist,
- eine Vorrichtung (7) zur Verschiebe-Verbindung des Konsolenkörpers (5) mit dem fixen Halter (3), wobei die Verbindungs-Vorrichtung (7) aufweist zwei Längs-Führungen (17), von denen jede ein Längsschiene (19) und einen Schlitten (21) aufweist, der mit der Schiene (19) translationsfrei im Eingriff ist,
**dadurch gekennzeichnet, dass** die Verschiebe-Verbindungs-Vorrichtung (7) aufweist zwei bewegbare Halter (23), die im Querabstand voneinander sind, und wenigstens zwei Verstärkungen (25), die voneinander verschieden sind und die von den bewegbaren Haltern (23) verschieden sind, wobei die Verstärkungen (25) im Längsabstand voneinander sind und die bewegbaren Halter (23) aneinander fixieren, wobei der Konsolenkörper (5) an den Verstärkungen (25) fixiert ist, wobei jede Schiene (19) an einem der bewegbaren Halter (23) fixiert ist, wobei die Schlitten (21) an dem fixen Halter (3) fixiert sind.

2. Konsole gemäß Anspruch 1, **dadurch gekennzeichnet, dass** die bewegbaren Halter (23) Längs-Metallprofile sind.

3. Konsole gemäß irgendeinem der vorhergehenden Ansprüche, **dadurch gekennzeichnet, dass** jede Verstärkung (25) ein querlanggestrecktes Metallteil ist, das zwei Quer-Endabschnitte (35) hat, die einander entgegengesetzt sind und die jeweils an einem bewegbaren Halter (23) fixiert sind.

4. Konsole gemäß Anspruch 4, **dadurch gekennzeichnet, dass** jede Verstärkung (25) eine Bogenform hat, wobei die Endabschnitte (35) bezüglich eines zentralen Abschnitts (37) der Verstärkung (25) vorstehen.

5. Konsole gemäß irgendeinem der vorhergehenden Ansprüche, **dadurch gekennzeichnet, dass** die Verschiebe-Verbindungs-Vorrichtung (7) aufweist wenigstens eine Abdeckung (49), wobei die jeweiligen Längsenden (51) vis-à-vis der bewegbaren Halter (23) durch die besagte Abdeckung (49) aneinander fixiert sind.

6. Konsole gemäß Anspruch 7, **dadurch gekennzeichnet, dass** jede Abdeckung (49) eine Metallplatte ist, die aufweist einen zentralen Bereich (53), der im Wesentlichen senkrecht zur Längsrichtung ist, und einen Rand (55), der bezüglich des zentralen Bereichs (53) abgewinkelt ist und sich über wenigstens einen Teil der Peripherie des zentralen Bereichs (53) erstreckt, wobei Ausnehmungen (65) in dem abgewinkelten (55) ausgeschnitten sind, um der Abdeckung (49) eine Querflexibilität zu verleihen.

7. Konsole gemäß irgendeinem der vorhergehenden Ansprüche, **dadurch gekennzeichnet, dass** die Verstärkungen (2) und die bewegbaren Halter (23) aneinander fixiert sind durch ein Verfahren ohne Wärmezufuhr.

8. Serie von Konsolen gemäß irgendeinem der vorhergehenden Ansprüche, wobei die Serie aufweist:
- wenigstens eine erste Konsole (71), die bewegbare Halter (23) und eine erste Anzahl an Verstärkungen (25) aufweist,
- wenigstens eine zweite Konsole (73), welche Abmessungen hat, die von der ersten Konsole verschieden sind, und welche aufweist bewegbare Halter (23) und eine zweite Anzahl an Verstärkungen (25),
wobei die Verstärkungen (25) der ersten und der zweiten Konsole (71, 72) identisch sind.

9. Serie von Konsolen gemäß dem vorhergehenden Anspruch, **dadurch gekennzeichnet, dass** die bewegbaren Halter (23) identisch sind.

10. Serie von Konsolen gemäß Anspruch 8 oder 9, **dadurch gekennzeichnet, dass** die erste Anzahl und die zweite Anzahl von Verstärkungen (25) unterschiedlich sind.

11. Verfahren zur Herstellung einer Serie von Konsolen gemäß den Ansprüchen 8 bis 10, wobei das Verfahren die folgenden Schritte aufweist:
- Herstellen einer Mehrzahl von bewegbaren Haltern (23),
- Herstellen einer Mehrzahl von Verstärkungen (25), die alle identisch sind,
- Herstellen der besagten wenigstens einen ersten Konsole (71) und der besagten wenigstens einen zweiten Konsole (73) ausgehend von den bewegbaren Haltern (23) und den Verstärkungen (25), die vorab hergestellt wurden.

## Claims

1. A sliding vehicle console, the console (1) comprising:
- a stationary support (3) intended to be fastened to a structure of the vehicle;
- a console body (5) longitudinally movable relative to the stationary support (3);
- a sliding connection device (7) connecting the console body (5) to the stationary support (3), the connecting device (7) comprising two longitudinal guideways (17) each having a longitudinal rail (19) and a slide (21) engaged freely translating in the rail (19);
wherein the sliding connecting device (7) comprises two moving supports (23) transversely separated from one another and at least two reinforcements (25) separate from one another and separate from the moving supports (23), the reinforcements (25) being spaced longitudinally apart from one another and fastening the moving supports (23) to one another, the console body (5) being fastened to the reinforcements (25), each rail (19) being fastened to one of the moving supports (23), the slides (21) being fastened to the stationary support (3).

2. The console according to claim 1, wherein the moving supports (23) are longitudinal metal profiles.

3. The console according to the claim 1, wherein each reinforcement (25) is a transversely elongated metal part, having two transverse end parts (35) opposite one another each fastened to a moving support (23).

4. The console according to claim 4, wherein each reinforcement (25) is cradle-shaped, the end parts (35) protruding relative to a central part (37) of the reinforcement (25).

5. The console according to the claim 1, wherein the sliding connecting device (7) comprises at least one cover (49), respective longitudinal ends (51) opposite moving supports (23) being fastened to one another by said cover (49).

6. The console according to claim 7, wherein each cover (49) is a metal plate including a central zone (53) substantially perpendicular to the longitudinal direction, and an edge bent (55) relative to the central zone (53) and extending over at least part of the periphery of the central zone (53), notches (65) being cut into the bent edge (55) to impart a transverse flexibility to the cover (49).

7. The console according to the claim 1, wherein the reinforcements (25) and the moving supports (23) are fastened to one another by a method not using a heat contribution.

8. A range of consoles according to the claim 1, the range comprising:
- at least a first console (71), including moving supports (23) and a first number of reinforcements (25);
- at least a second console (73), with different dimensions from the first console, including moving supports (23) and a second number of reinforcements (25);
the reinforcements (25) of the first and second consoles (71, 72) being identical.

9. The range of consoles according to the claim 8, wherein the moving supports (23) are identical.

10. The range of consoles according to claim 8, wherein the first number and the second number of reinforcements (25) are different.

11. A method for manufacturing a range of consoles according to claim 8, the method comprising the following steps:
- manufacturing a plurality of moving supports (23);
- manufacturing a plurality of reinforcements (25) that are all identical;
- manufacturing said at least one first console (71) and said at least one second console (73) from moving supports (23) and reinforcements (25) manufactured beforehand.
